# EUROPEAN PATENT SPECIFICATION

(11) **EP 3 237 771 B1**
(45) Date of publication and mention of the grant of the patent: **15.04.2020**
(21) Application number: 15839142.5
(22) Date of filing: 28.12.2015
(51) Int. Cl.: F16C 35/02, C23C 2/00, F16C 35/063, F16C 13/02

(54) **THRUST BEARING AND CLAMP IN ROLL JOURNAL ASSEMBLY**
DRUCKLAGER UND SPANNVORRICHTUNG IN EINER WALZENZAPFENANORDNUNG
PINCE ET PALIER DE BUTÉE DANS UN ENSEMBLE TOURILLON DE CYLINDRE

(30) Priority: 23.12.2014 US 201462096213 P
(43) Date of publication of application: 01.11.2017
(73) Proprietor: Arcelormittal S.A., 1160 Luxembourg (LU)
(72) Inventor: MCDOUGALL, Carl, Grimsby, Ontario L3M 4E7 (CA); TAIT, Terry, Jerseyville, Ontario L0R 1R0 (CA)
(74) Representative: Lavoix
(86) International application number: PCT/IB2015/002580
(87) International publication number: WO 2016/103044

(56) References cited:
- EP-A1- 2 159 298
- WO-A1-2013/152763
- DE-A1- 3 435 821
- DE-A1-102004 031 709
- JP-A- S6 088 215
- JP-A- H11 141 541
- JP-A- 2001 234 924
- US-A1- 2003 133 632

## Description

### FIELD

The present description relates to thrust bearings and clamps for submerged roll assemblies in a continuous hot-dipping process.

### BACKGROUND

Hot-dip galvanizing is a process used for rust proofing materials such as iron and steel by coating the iron and steel with the desired coating such as zinc. For example, a sheet of steel is immersed into a bath of molten zinc using journal roll assemblies at temperatures around 465°C. The bearings for journal roll assemblies submerged in molten baths are known in the art. They are used in different processes such as galvanizing flat sheet steel using cold mill substrate, galvanizing anneal flat sheet/strip steel using cold mill substrate, or galvanizing aluminum flat sheet/strip steel using cold mill substrate or other applications as will be known in the art.

As the roll assemblies turn in the molten bath of speeds sometimes around 170 meters/minute, the strip of steel or metal is pulled through the molten bath. The exposure of sink roll assemblies to hot molten liquid, for example, molten zinc, generally around 465°C, subjects the assembly to significant damage. Additionally, as the steel flat strip is fed into the molten bath, a side thrust is induced in the journal roll that makes it move in a linear axis.

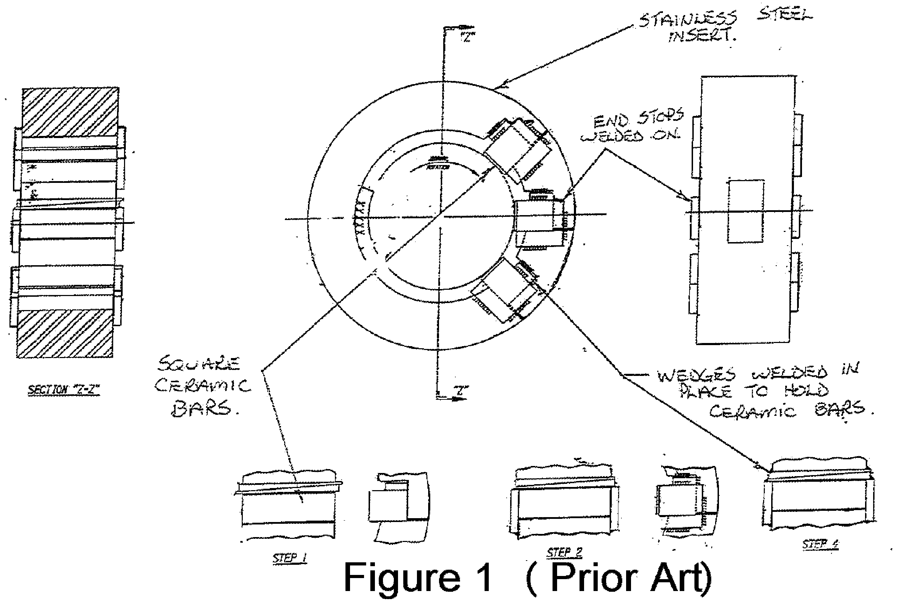

Present designs for sink roll assemblies use stainless steel clamps or shells having a generally round cross section (cylindrical clamps) as shown in Figure 1 "Prior Art". Rectangular prism ceramic bars are embedded into corresponding slots machined into the cylindrical clamp's inner wall so that a portion of each of the rectangular ceramic bars is exposed in the interior of the cylindrical clamp. Roll journals that rotate are inserted into the interior of the cylindrical clamp and the rectangular ceramic bars function to limit friction during rotation while also permitting the flow of molten zinc or other coating though the clearances. To limit the displacement of the rectangular ceramic bars into the interior of the cylindrical clamp, wedges are generally installed between the corresponding slots and the rectangular ceramic bars and may be welded in place.

However, the installation of these wedges may be user dependent leading to inconsistencies in installation and inconsistent wedge pressure on the rectangular ceramic bars. Further, the welding process to install the wedges exposes the brittle ceramic bars to localized heating that can affect the properties of the ceramic bars. Wedges that are machined differently can also subject the rectangular prism ceramic bars to various pressure points, which can contribute to the cracking and breaking of these rectangular prism ceramic bars. Failure of these rectangular prism ceramic bars to stay in place with the wedges due to cracking, breaking, or other reasons can result in vibration of the roll journal during rotation, again causing breakage, failure (sometimes permanent), and sleeve damage all leading to increased costs for repairs and production delays due to repairs or changing the equipment.

A further potential issue with rectangular ceramic bars is the dross or hard floating particles that move in the molten bath. During roll journal rotation, dross may be trapped inside the corresponding slots between the wedges and rectangular ceramic bars. The sharp edges of these rectangular prism ceramic bars can render more difficult the flow of dross during rotation. Thus, the trapping of the dross can lead to scoring of the roll journals and premature wear or failure. Thus, dross drawn in between the rectangular ceramic bars and hardened sleeve can score both the ceramic bars and sleeves leading to premature wear of the sleeves. This can also, in turn, lead to breaking or cracking of the ceramic bars. Equipment failure or damage may not be readily detected because the equipment is submerged in molten baths. In some situations, the sleeve may be worn away permitting the rotating roll journal to break free in the molten bath causing significant safety issues.

JP 2001234924 shows the preamble of claims 1 and 2 and discloses a roll journal assembly having cylindrical ceramic bars.

Present designs such as shown in DE 10 2004 031 709 which discloses the preamble of claim 4 also use thrust bearings to limit the side thrusts of the roll journal.

These thrust bearings include a 316L button to register with a 316L stainless steel block that is welded in place. During rotation, this design similarly suffers from premature wear. Premature wear can widen the requisite clearances between the roll and the bearing and can lead to disruption of the rotation of the rolls. This rotation disruption, in turn, can cause skidding of the sheet being rotated through the molten bath, and can result in quality defects. Additionally, this disruption can require shutting down the equipment to replace or fix the equipment resulting in delays.

Thus, it is desired to improve one or components of a roll bearing assembly in order to overcome at least one of the above disadvantages.

### SUMMARY

An improved roll journal assembly including a clamp is provided in claims 1 and 2, and a thrust bearing insert is provided in claim 4.

Thus, according to an aspect of the present invention, a clamp having an inner wall defining a substantially cylindrical passage therethrough for use in a roll journal assembly is provided. The clamp comprises a plurality of semi-cylindrical slots extending longitudinally along its inner wall and extending the length of the cylindrical passage. A plurality of corresponding cylindrical ceramic bars having a body and two ends are embedded within said semi-cylindrical slots so that at least a portion of the body of the cylindrical ceramic bars extend into the passage.

According to another aspect of the present disclosure there is provided a roll journal assembly for use in a molten bath environment having roll arms supporting a clamp as above defined for receiving a roll journal rotatable about a central longitudinal axis, the axis defining the center of two roll ends of the rotatable roll journal, the rotatable roll journal surrounded by a journal sleeve and the roll arms further having a thrust bearing insert mounted within an aperture in the roll arm for dampening side thrusts of the roll journal during rotation.

In another aspect of the disclosure, the thrust bearing insert comprises a thrust sleeve having an open flanged end and a closed other end defining a cylindrical interior cavity. The thrust sleeve is inserted into an aperture of the roll arm so that the cylindrical interior cavity axially aligns with the central longitudinal axis of the roll arm and the flanged end faces the roll journal for limiting lateral movement of the thrust sleeve away from the roll journal. The thrust cylindrical ceramic bar is of substantially the same length as said cylindrical interior cavity of the sleeve and has a first end receivable in the sleeve and a second end for registration with the roll journal. An insert protection cover is installed over the closed other end of the thrust sleeve for limiting the flow of molten material onto the thrust sleeve.

In another aspect of the present disclosure, the above thrust sleeve has an open flanged end an open other end defining a substantially cylindrical interior passage therethrough for receiving the cylindrical ceramic bar above.

### BRIEF DESCRIPTION OF THE DRAWINGS

These and other features of the disclosure will become more apparent from the following description in which reference is made to the appended drawings wherein:
FIGURE 1 shows a cross-section of a prior art design of a clamp having embedded rectangular prism ceramic bars;
FIGURE 2 shows a front perspective view of a clamp having embedded cylindrical bars in accordance with an embodiment of the roll journal assembly of the present disclosure;

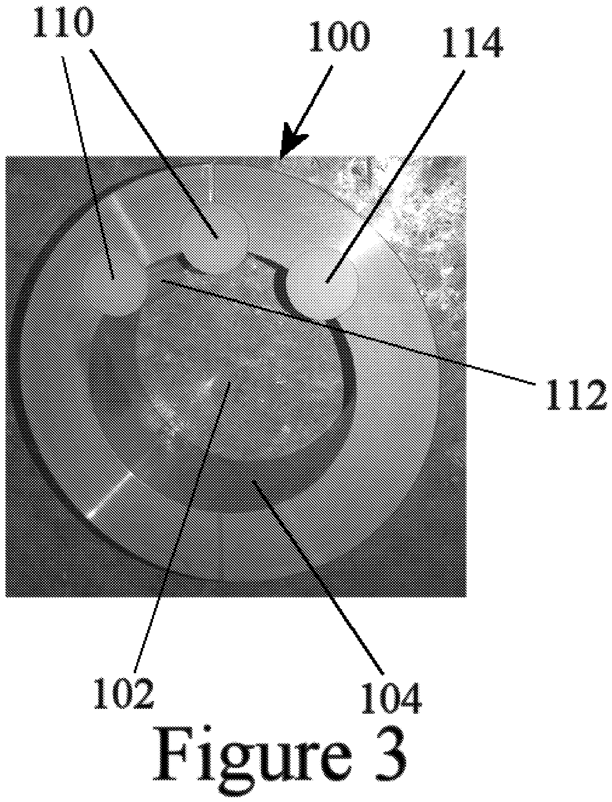

FIGURE 3 shows a front perspective view of the clamp of Figure 2 prior to the stop tabs being added.
FIGURE 4 shows a front perspective view of the clamp of Figure 2 following exposure to molten zinc;
FIGURE 5 shows a side perspective view of the clamp of Figure 2 with the journal inserted concentrically in accordance with an embodiment of the roll journal assembly of the present disclosure;
FIGURE 6 shows a perspective view of the clamp and thrust assembly in accordance with one embodiment of the present disclosure;

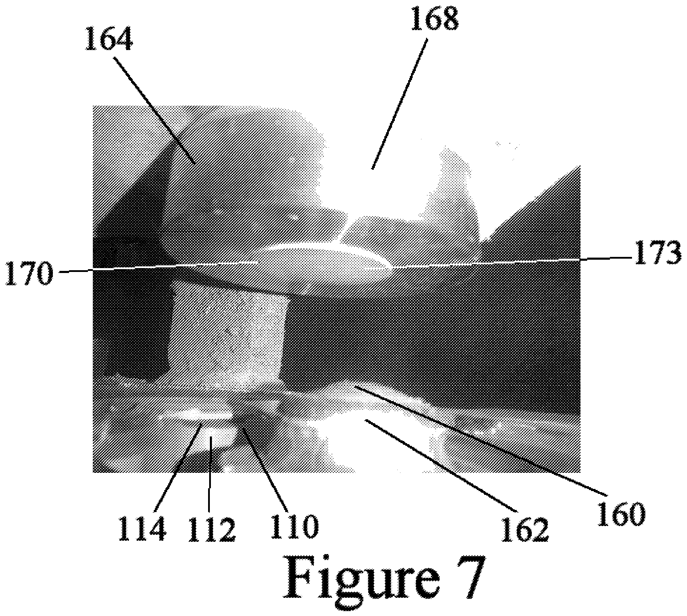

FIGURE 7 shows a perspective view of the thrust bearing in accordance with an embodiment of the present disclosure; and
FIGURE 8 shows a perspective view of the stainless steel insert used in the thrust bearing of Figure 7 and the button installed on the clamp of Figure 3.
FIGURE 9 shows a shows a cross-sectional and partial cut-away view of a clamp and thrust bearing assembly used in continuous hot-dipping in accordance with an embodiment of the present disclosure;
FIGURE 10A shows a front view of the clamp of Figure 9;
FIGURE 10B shows a side view of the clamp of Figure 9;
FIGURE 11A shows a side cross-sectional view of the thrust bearing insert of Figure 5; and
FIGURE 11B shows a side view of the button installed in Figure 9.

| | | | |
|---|---|---|---|
| 100 | clamp | 170 | thrust ceramic bar |
| 102 | passage | 172 | first end |
| 104 | inner wall | 173 | second end |
| 106 | roll journal | 174 | insert protection cover |
| 108 | journal sleeve | 176 | cover aperture |
| | | 178 | cap screw |
| 110 | cylindrical bars | 180 | head |
| 112 | body | 200 | roll arm |
| 114 | ends | 202 | aperture |
| 116 | semi-cylindrical slots | | |
| 118 | stop tabs | | |
| 160 | button | | |
| 162 | apex | | |
| 164 | stainless steel sleeve | | |
| 165 | thrust bearing insert | | |
| 166 | cavity | | |
| 167 | interior passage | | |
| 168 | flanged end | | |
| 169 | closed other end | | |
| 171 | open other end | | |

### DETAILED DESCRIPTION

Reference is now made to the accompanying drawings.

Throughout the application 1 inch equals 0.0254 meter.

A clamp suitable for incorporation in a roll journal assembly having roll arms 200 for use in a molten bath environment is provided. In one aspect of the present disclosure, the clamp 100 has an inner wall 104 defining a substantially cylindrical passage 102 therethrough for receiving a roll journal 106 rotatable about a central longitudinal axis. The axis defines the center of two roll ends of the rotatable roll journal 106, and the rotatable roll journal 106 is surrounded by a journal sleeve 108.

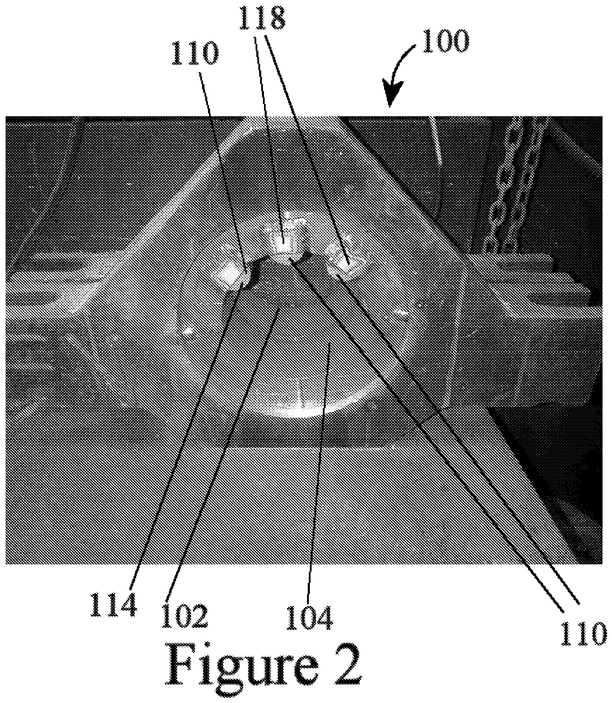

As shown in Figures 2, the roll journal assembly comprises a clamp 100 having a plurality of semi-cylindrical slots 116 extending longitudinally along the inner wall 104 of the clamp 100 and extending the length of the cylindrical passage 102. A plurality of corresponding cylindrical ceramic bars 110 having a body 112 and two ends 114 are installed into the semi-cylindrical slots 116 so that at least a portion of the body 112 of the cylindrical ceramic bars 110 extends into the passage 102 for registration with the journal sleeve 108.

In the accompanying drawings, three cylindrical bars 110 are used. These cylindrical bars 110 limit friction during rotation and may support the tension force of the strip as it is pulled through the assembly. A greater number of cylindrical ceramic bars 110 may also be used. The cylindrical ceramic bars 110 may be installed by shrink or interference fit. For example, a clamp 100 having an inner wall 104 may be machined to provide the semi-cylindrical slots 116. Next, the clamps 100 may be heated, for example in a furnace, to provide expansion clearance to permit sliding the cylindrical bars 110 into the corresponding semi-cylindrical slots 116. Once the cylindrical bars 110 are inserted into the semi-cylindrical slots 116, the clamp 100 having the cylindrical bars 110 installed may be left to cool at a controlled rate to limit shock or damage to the cylindrical bars 110.

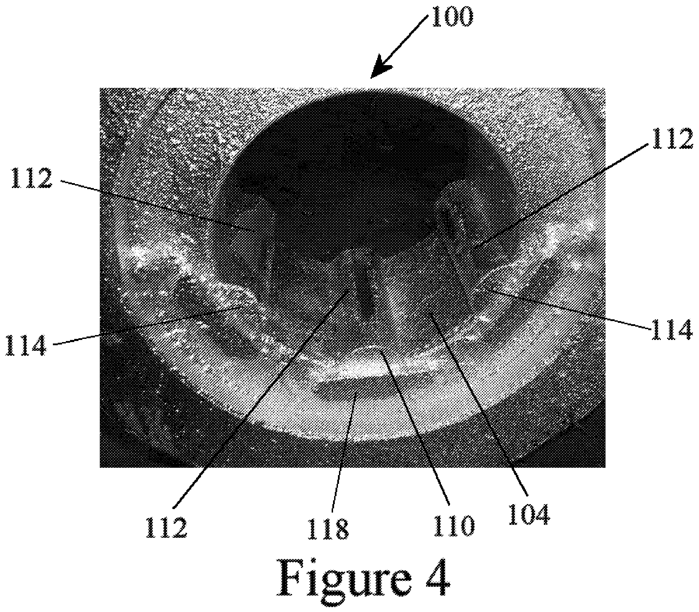

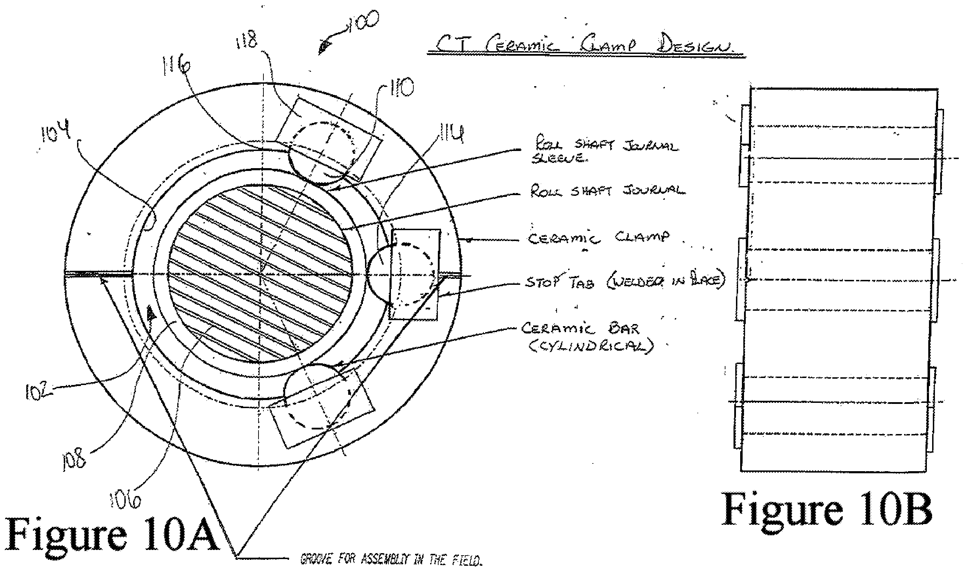

To limit longitudinal displacement of the cylindrical bar 110 out of the passage 102, stop tabs 118 may be applied over the ends 114 of the cylindrical bars 110 that are embedded within the clamp 110. These stop tabs 118 may take the form of a strip of 316L stainless steel that is welded in place as shown in Figs. 2, 4, 5, and 10B. Although shown to completely cover the ends 114 of the cylindrical bars 110, the stop tabs may be a small strip that covers a portion of the ends 114 of the cylindrical bars 110 and may be welded or otherwise secured in place. In other embodiments, multiple strips may be used and may be applied in parallel or cross over each other. Alternatively, the stop tabs 118 may take the form of a ring of 316L that is machined and tack welded in place. The stop tabs may be of any material suitable for high temperatures as known to one skilled in the art. Still other means of limiting the longitudinal displacement of the cylindrical bar 110 may be employed as will be known to one skilled in the art.

Use of the cylindrical bars 110 within the clamp advantageously circumvents the use of wedges for stabilization purposes. The elimination of wedges alleviates the problems associated with inconsistent wedging and inconsistent pressure applied to the bars that would otherwise lead to cracks and failure of the bars. Rather, the cylindrical bar 110 is shrink fitted into the slot 116 formed in the inner wall 104 of the clamp 100, thus avoiding the use of welding for the wedges and attendant localized heating that may otherwise result which can also adversely affect the properties of the bar. Additionally, use of a shrink fitted cylindrical bar 110 helps limit the displacement of the cylindrical bar 110 into the cylindrical interior of the clamp 100 or out of the corresponding slot 116.

Further, the use of cylindrical bars 110 also alleviates issues associated with dross trapping that occur in prior art clamps comprising rectangular prism bars. For example, the use of cylindrical bars 110 improves the movement of the debris or dross that may otherwise be trapped by the edges or corners of the prior art rectangular prism bar. This flow of dross during rotation of the roll helps reduce scoring of the roll or sleeve which in turn reduces wear.

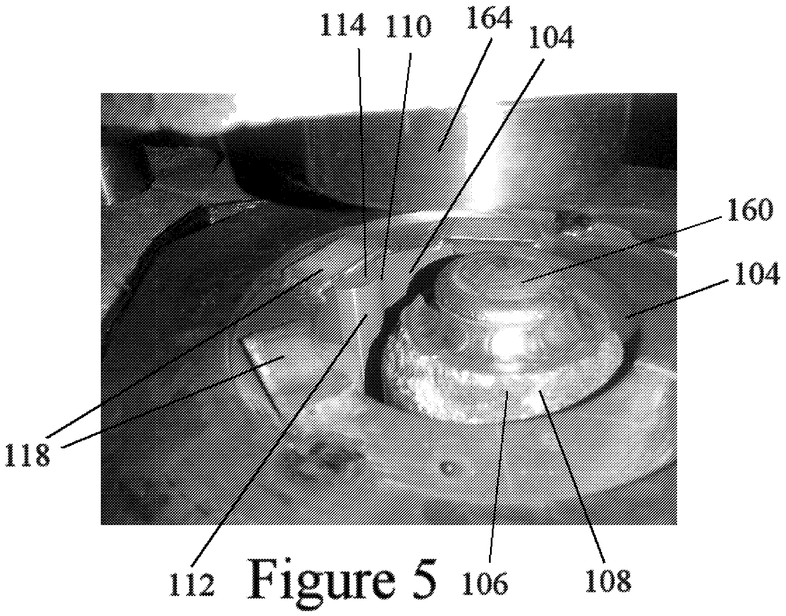

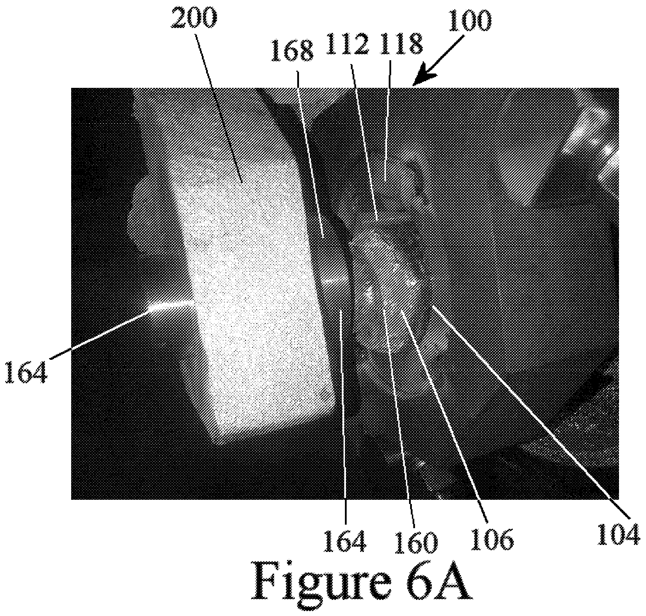

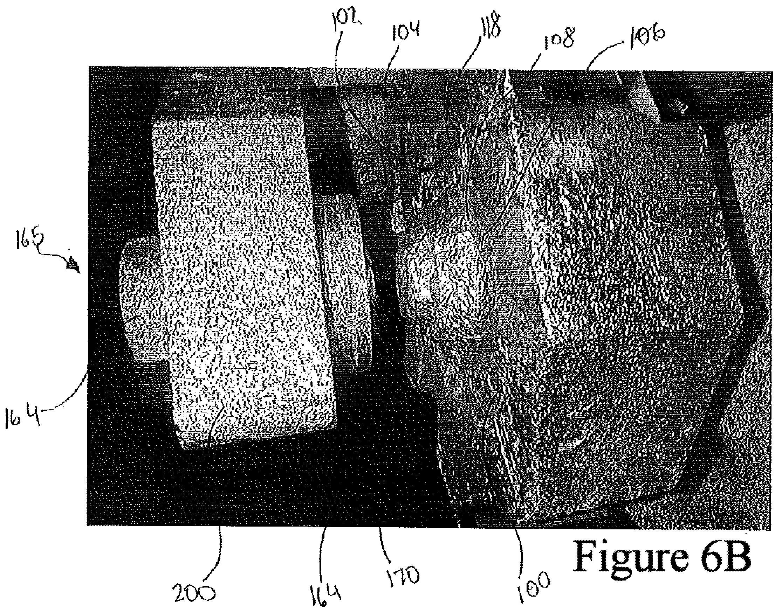

As illustrated in Figs. 5 and 6, the clamp 100 is designed to receive within the cylindrical passage 102 the substantially cylindrical rotatable roll journal 106. The roll journal may be made of 316L stainless steel, stelite, or other suitable material known to one skilled in the art. The substantially cylindrical journal sleeve 108 surrounds the rotatable roll journal 106. This journal sleeve 108 may be coated with a hardened surface material. For example, the journal sleeve 108 may be carbide coated or tungsten carbide coated having a thickness from about 0.050 inches to about 0.070 inches and serves to protect the rotatable roll journal 106 from the high temperatures and damaging conditions of the molten bath. It also provides a hardened surface against which the ceramic cylindrical bars 110 are rotated. This improves the projected life of the sleeve in the molten environment. As will be known to one skilled in the art, the journal sleeve 108 may be changed after some time.

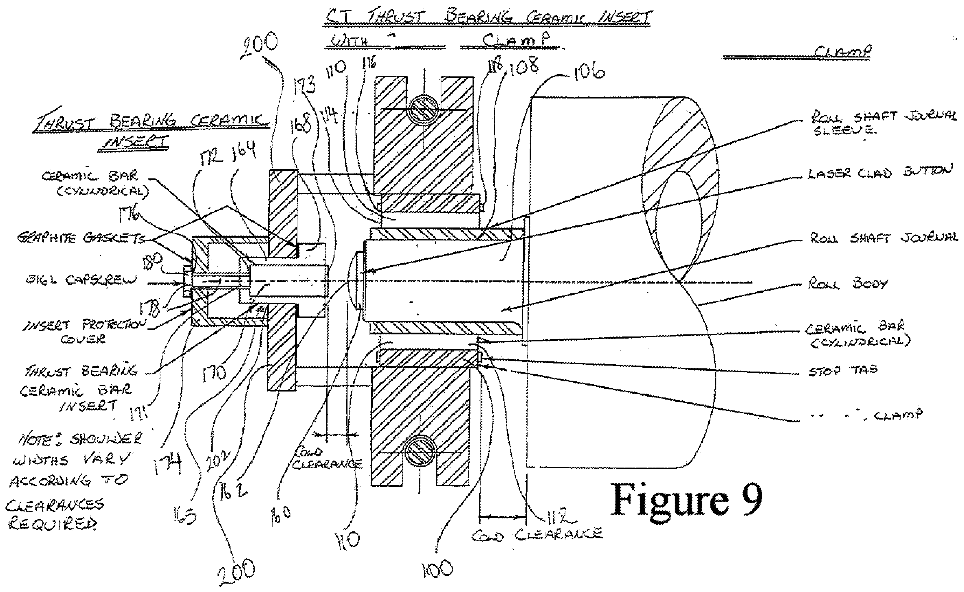

Referring now to Figure 9, the roll arms 200 further comprise a thrust bearing insert 165 mounted within an aperture 202 in the roll arm 200 for dampening side thrusts of the roll journal 106 during rotation. Thus, during use in the roll assembly, each end of the roll journal 106 is in registration with the thrust bearing insert 165.

Referring now to Figs. 5, 6, 9, and 11B, a generally dome-shaped button 160 having an apex 162 defines each end of the roll journal 106. The apex 162 of the button 160 is in line with the central longitudinal axis of the roll end for registration with the thrust bearing insert discussed below and to dampen the side thrusting of the roll journal 106 during rotation. The button 160 is of a hardened material or coated with a hardened material such as tungsten carbide to limit wearing when the apex 162 of the button contacts the thrust bearing insert 165 of the assembly as described below, and ultimately to limit wear on the shaft 106. The hardened coating may be of a thickness suitable to endure wear on the shaft 106 for a period of time, for example, 0.01-0.1 inches thick, e.g. 0.05 inches thick.

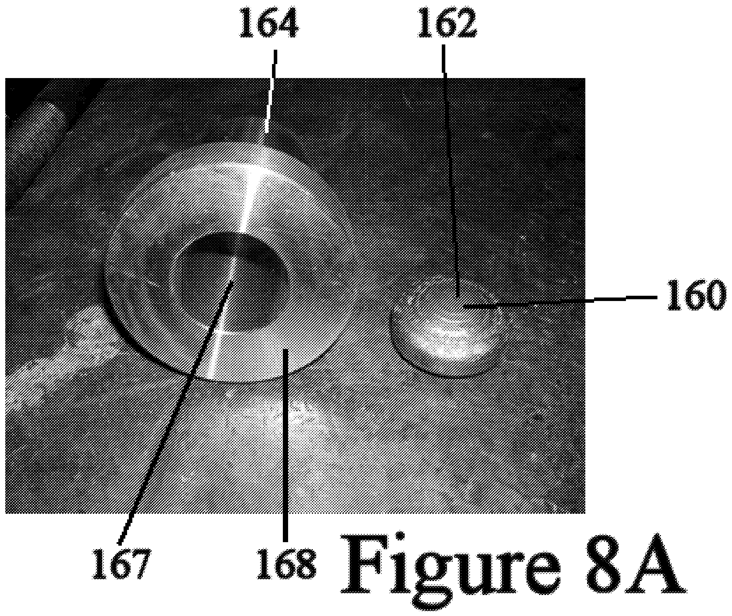

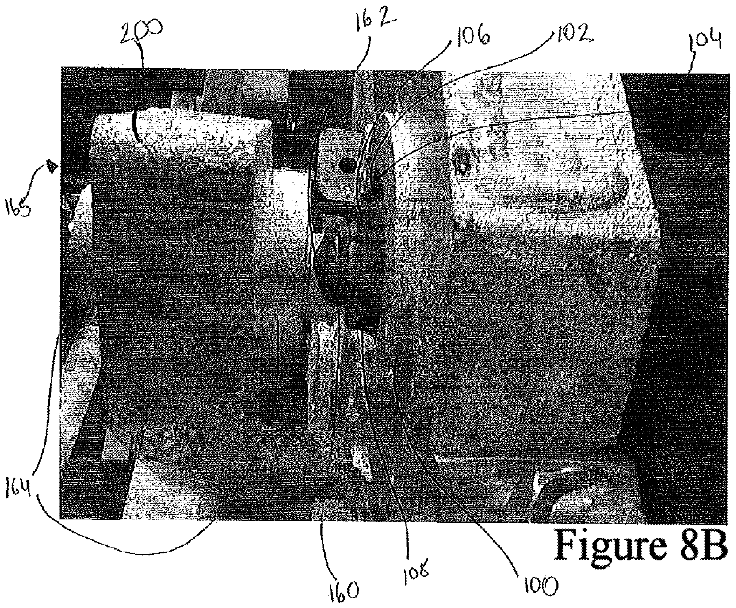

The button 160 may be integral with the roll journal 106. Alternatively, the button 160 may be welded or otherwise secured in place to permit removal during reconditioning or machining of the roll journal 106 or roll sleeve 108. As shown in Fig. 8, the button 160 is of a circular base shape having approximately the same diameter as the end of the shaft 106. However, the button 160 may be of a smaller diameter than the shaft 106 as long as the apex 162 is in registration with the center of the shaft of the roll journal 106 to ensure contact with the thrust bearing insert. The button 160 may also have a rectangular, trapezoidal, or any other base shape so long as it is generally dome shaped in that it has an apex 162 extending from the center of the shaft 106. The point contact of the apex 162 of the button 160 with the ceramic insert as discussed below limits friction, thus permitting rotation of the roll journal 106.

The apex 162 of the button 160 meets the thrust bearing insert 165 and rotates against the thrust bearing insert 165 discussed below. This, in turn, dampens the side thrusting of the journal 106 while permitting roll rotation. Accordingly, this provides for clearance between the thrust bearing insert 165 and the roll journal 106 and limits the contact of the roll journal 106 with the roll arm 200 that could otherwise limit roll rotation. Advantageously, the point contact between the thrust cylindrical ceramic bar (discussed below) in the thrust bearing insert 165 and the button reduces wear on the thrust cylindrical ceramic bar (discussed below), alleviating problems, such as roll rotation disruption.

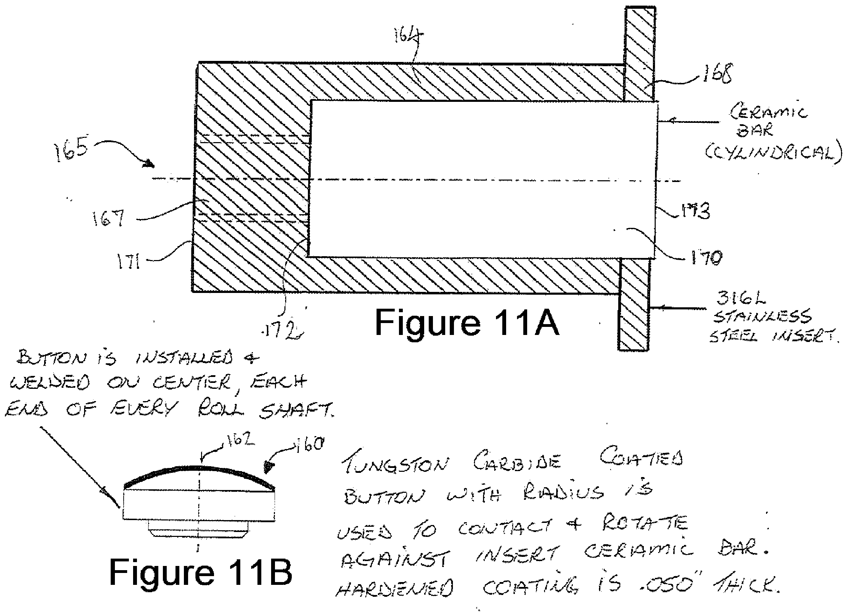

As shown in Fig. 9, the thrust bearing insert 165 sits within an aperture 202 of the roll arm 200 in the assembly. The thrust bearing insert 165 comprises a thrust sleeve 164 having an open flanged end 168 and a closed other end 169 defining a cylindrical interior 166 for receiving a thrust cylindrical ceramic bar 170 of substantially the same length as the cavity 166 as shown in Fig. 11A. The sleeve 164 may be stainless steel, e.g. 316L, or any other suitable material as will be known to one skilled in the art. The thrust bearing insert 165 sitting within the aperture 202 of the roll arm 200 is inserted so that the cylindrical interior cavity 166 axially aligns with the central longitudinal axis of the roll arm 200 and the flanged end 168 faces the roll journal 106 for limiting lateral movement of the thrust sleeve 164 away from the roll journal 106 in the assembly. Thus, the flanged end 168 rests against the roll arm 200 for limiting lateral movement of the thrust bearing insert 165 from the force applied by the side thrusts of the journal shaft 106.

To limit the molten metal, for example, molten zinc, from entering any spacing between the flange 168 and the roll arm 200, a graphite gasket or other material as will be known to one skilled in the art may be installed between the flange 168 and the roll arm 200.

The thrust cylindrical ceramic bar 170 of substantially the same length as the interior cavity 166 into which it is inserted has a first end 172 receivable in the sleeve and a second end 173 for registration with the roll journal 106. To permit contact between the second end 173 of the ceramic bar 170 and the button 160, the second end 173 of the ceramic bar 170 may extend from within the interior cavity 166 beyond the edge of the flange 168. The thrust ceramic bar 170 is held in place within the interior cavity 166 by interference shrink fit to limit movement out of the interior cavity 166. To achieve the interference shrink fit, the sleeve 164 may be heated to get the clearance needed to insert the thrust cylindrical ceramic bars 170. The insert including the ceramic bar is then left to cool in a controlled fashion to limit cracking.

To further limit movement of the thrust ceramic bar 170 out of thrust bearing insert 165, for example, due to side thrusts of the roll journal 106, an insert protection cover 174 may be employed as shown in Fig. 9. Thus, the insert protection cover 174 may be installed over the closed other end 169 of the thrust sleeve 164 for limiting the flow of molten material into the thrust sleeve 164. This insert protection cover 174 may be made of any suitable material capable of withstanding heat, such as 316L stainless steel. The insert protection cover 174 may be of any shape and may be installed over the closed end of the insert 165, for example, by welding the insert protection cover 174 to the arm roll 200. This protection cover 174 limits the flow of molten metal into any potential space between the roll arm 200 and the insert 165 on the exterior side of the roll arm 200.

A cover aperture 176 is formed in the insert protection cover 174 in axial alignment with the interior cavity 166 of the insert 164. Thus, the cover aperture 176 in the insert protection cover 174 is in axial alignment with the central longitudinal axis of the roll arm 200. A cap screw 178 having an elongated body is insertable into the cover aperture 175 for engagement with the closed end 169 of the thrust sleeve 164. The cap screw 178 may have a head 180 for engaging the insert protection cover 174 and for limiting lateral movement of the thrust sleeve 164 toward the roll journal 106.

In this embodiment, the cap screw may not contact the ceramic bar 170. For example, if ceramic bar 170 is installed in the cavity 166, then the cap screw 178 may simply connect with the insert 165 but not the ceramic bar 170. In the accompanying drawings, the cap screw 178 is shown to have a head 180 that engages the insert protection cover 174. Graphite gasket or other material as known to one skilled in the art may be installed between the head 180 and the protection cover 174 to limit the molten metal from entering any spacing between the head 180 and the protection cover 174.

In an alternate embodiment, the thrust sleeve 164 has an open flanged end 168 and an open other end 171 defining a substantially cylindrical interior passage 167 therethrough for receiving the thrust cylindrical ceramic bar 170. Thus, the thrust sleeve 164 is inserted into the aperture 202 of the roll arm 200 so that the cylindrical interior passage 167 aligns with the central longitudinal axis of the roll arm 200 and the flanged end 168 faces the roll journal for limiting lateral movement of the thrust sleeve 164 away from the roll journal 106.

Thus, the cover aperture 176 in the insert protection cover 174 may be in axial alignment with the interior passage 167 of the insert 164. Thus, the cap screw 178 is insertable into the cover aperture 176 and through the interior passage 167 of the insert 165. This cap screw 178 contacts the first end 172 of the ceramic bar 170 placed within the interior passage 167 to limit lateral movement of the ceramic bar 170. Accordingly, the second end 173 of the thrust ceramic bar 170 inserted within the interior passage 167 can contact the button 160, while the first end 172 is not contained within a cavity but terminates within the passage 167 for contact with the cap screw 178. As above, the cap screw 178 may optionally threadedly engage the insert 165 or otherwise engage with the insert 165.

Tightening the cap screw 178 helps to maintain the seal on the graphite gaskets and permit the insert 165 to be repositioned if the journal sleeve 108 of the roll assembly is changed. For example, when removing the journal sleeve 108, the roll journals 106 may be machined for removal of the button 160 that results in an overall shortening of the length of the roll journal 106. Accordingly, the insert 164 may either be shimmed to compensate for the shortening of the roll journal, or new inserts 164 of a suitable length may be installed to maintain the desired clearance between the button 160 and the ceramic insert 164.

The present clamp 100 may be provided separately for insertion into a roll assembly, either in complete form e.g. with a plurality of cylindrical embedded bars 110, or may be provided in kit form, e.g. with clamp 100 having semi-cylindrical slots 116 formed therein, and cylindrical bars 110 to be embedded into the slots 116. The clamp 100 may optionally be provided with one or more other elements to modify a roll assembly as described including a roll journal button(s) 160, and elements to modify the roll arm 200, e.g. thrust bearing insert 165 comprising a thrust sleeve 164 with thrust ceramic bar 170, thrust bearing insert protection cover 174, cover aperture 176, and cap screw 178.

Alternatively, the present thrust bearing insert 165 may be provided separately for insertion into a roll assembly, either in complete form e.g., with a thrust ceramic bar 170 inserted into a thrust sleeve 164 and having installed a thrust bearing insert protection cover 174 having a cap screw 178 inserted through the cover aperture 176 of the thrust bearing insert protection cover 174. The thrust bearing insert 164 may optionally be provided with one or more other elements to modify the roll assembly as described including a roll journal button(s) 160, and a modified clamp as described above.

Alternatively, a modified roll assembly may be provided incorporating one or more of the elements described herein.

To enhance the above embodiments, a flush line or piping (not shown) may optionally be installed in the clamp 100 and thrust bearing insert 165 to flush dross build-up. The flush line may be 316L stainless steel or other suitable material known in the art able to withstand the molten conditions into which it is inserted. The flush line or piping may be used to inject nitrogen gas into the areas of dross build-up, for example, in the location of the installed ceramic cylindrical bars 110 or ceramic bars 170. In these embodiments, the flush lines may be mounted on the roll arms 200 and may be regulated using a control that controls the amount of gas required for cleaning or flushing. In some embodiments, the flush lines may be constantly delivering nitrogen gas for cleaning. In other embodiments, the flush lines may be periodically used to clean or flush the dross in predetermined periods or as required.

One or more currently preferred embodiments have been described by way of example. It will be apparent to persons skilled in the art that a number of variations and modifications can be made without departing from the scope of the invention as defined in the claims.

## Claims

1. A roll journal assembly for use in a molten bath environment having roll arms (200) supporting a clamp (100), the clamp (100) having an inner wall (104) defining a substantially cylindrical passage (102) therethrough for receiving a roll journal (106) rotatable about a central longitudinal axis, said axis defining the center of two roll ends of the rotatable roll journal (106), the roll journal assembly comprising:
- a plurality of semi-cylindrical slots (116) extending longitudinally along the inner wall (104) of the clamp (100) and extending along the whole length of the cylindrical passage (102);
- a plurality of corresponding cylindrical ceramic bars (110) having a body (112) and two ends (114), said cylindrical ceramic bars (110) installed into said semi-cylindrical slots (116)
**characterized in that**:
- the rotatable roll journal (106) is surrounded by a journal sleeve (108),
- said cylindrical ceramic bars (110) are installed into said semi-cylindrical slots (116) so that at least a portion of said body (112) of the cylindrical ceramic bars (110) extends into said passage (102) for registration with the journal sleeve (108);
- the roll arms (200) further have a thrust bearing insert (165) mounted within an aperture (202) in the roll arm (200) for dampening side thrusts of the roll journal (106) during rotation, each end of the roll journal (106) being in registration with the thrust bearing insert (165),
and the thrust bearing insert (165) comprises:
- a thrust sleeve (164) having an open flanged end (168) and a closed other end (169) defining a cylindrical interior cavity (166);
- said thrust sleeve (164) inserted into the aperture (202) of the roll arm (200) so that the cylindrical interior cavity (166) axially aligns with the central longitudinal axis of the roll arm (200) and said flanged end (168) faces the roll journal (106) for limiting lateral movement of said thrust sleeve (164) away from the roll journal (106);
- a thrust cylindrical ceramic bar (170) of substantially the same length as said cylindrical interior cavity (166) of the sleeve (164) and having a first end (172) receivable in said sleeve (164) and a second end (173) for registration with the roll journal (106); and
- an insert protection cover (174) installed over the closed other end (169) of the thrust sleeve (164) for limiting the flow of molten material onto the thrust sleeve (164).

2. A roll journal assembly for use in a molten bath environment having roll arms (200) supporting a clamp (100), the clamp (100) having an inner wall (104) defining a substantially cylindrical passage (102) therethrough for receiving a roll journal (106) rotatable about a central longitudinal axis, said axis defining the center of two roll ends of the rotatable roll journal (106), the roll journal assembly comprising:
- a plurality of semi-cylindrical slots (116) extending longitudinally along the inner wall (104) of the clamp (100) and extending along the whole length of the cylindrical passage (102);
- a plurality of corresponding cylindrical ceramic bars (110) having a body (112) and two ends (114), said cylindrical ceramic bars (110) installed into said semi-cylindrical slots (116),
**characterized in that**:
- the rotatable roll journal (106) is surrounded by a journal sleeve (108),
- said cylindrical ceramic bars (110) are installed into said semi-cylindrical slots (116) so that at least a portion of said body (112) of the cylindrical ceramic bars (110) extends into said passage (102) for registration with the journal sleeve (108);
- the roll arms (200) further have a thrust bearing insert (165) mounted within an aperture (202) in the roll arm (200) for dampening side thrusts of the roll journal (106) during rotation, each end of the roll journal (106) being in registration with the thrust bearing insert (165),
and the thrust bearing insert (165) comprises:
- a thrust sleeve (164) having an open flanged end (168) and an open other end (171) defining a substantially cylindrical interior passage (167) therethrough;
- said thrust sleeve (164) inserted into an aperture (202) of the roll arm (200) so that the cylindrical interior passage (167) axially aligns with the central longitudinal axis of the roll arm (200) and said flanged end faces the roll journal (106) for limiting lateral movement of said thrust sleeve (164) away from the roll journal (106);
- a thrust cylindrical ceramic bar (170) having a first end (172) receivable in said sleeve (164) and a second end (174) for registration with the roll journal (106); and
- an insert protection cover (174) installed over the open other end (171) of the thrust sleeve (164) for limiting the flow of molten material onto the thrust sleeve(164).

3. The roll journal assembly of claim 1 or 2, wherein the thrust bearing insert (165) further comprises:
- a cover aperture (176) in the insert protection cover (174) in axial alignment with the central longitudinal axis of the roll arm (200);
- a cap screw (178) having an elongated body insertable into said cover aperture (176) for engagement with the other end (169; 171) of the thrust sleeve (164); and
- said cap screw (178) having a head (180) for engaging said insert protection cover (174) and for limiting lateral movement of said sleeve (164) toward the roll journal (106).

4. A thrust bearing insert (165) for use in a roll journal assembly with molten material is provided, the thrust bearing insert (165) being **characterized in that** it comprises:
- a thrust sleeve (164) having an open flanged end (168) and an open other end (171) defining a substantially cylindrical interior passage (167) therethrough;
- a thrust cylindrical ceramic bar (170) of substantially the same length as said cylindrical interior passage (167) of the thrust sleeve (164) and having a first end (172) receivable in said sleeve (164) and a second end (172) for substantial alignment with said open flanged end (168); and
- an insert protection cover (174) installed over the open other end (171) of the thrust sleeve (164) for limiting the flow of molten material onto the thrust sleeve (164).

## Patentansprüche

1. Walzenzapfeneinrichtung zum Einsatz in einer Schmelzbadumgebung mit Rollenarmen (200), die eine Klemme (100) unterstützen, wobei die Klemme (100) eine Innenwand (104) aufweist, die einen dadurch verlaufenden, im Wesentlichen zylindrischen Durchgang (102) zur Aufnahme eines Walzenzapfens (106) aufweist, der um eine zentrale Längsachse rotierbar ist, wobei die Achse den Mittelpunkt der beiden Walzenenden des rotierbaren Walzenzapfens (106), wobei die Walzenzapfeneinrichtung umfasst:
- eine Mehrzahl halbzylindrischer Schlitze (116), die sich in Längsrichtung entlang der Innenwand (104) der Klemme (100) und entlang der ganzen Länge des zylindrischen Durchgangs (102) erstrecken;
- eine Mehrzahl entsprechender zylindrischer Keramikstäbe (110) mit einem Hauptteil (112) und zwei Enden (114), wobei die zylindrischen Keramikstäbe (110) in den halbzylindrischen Schlitzen (116) installiert sind,
**dadurch gekennzeichnet, dass**
- der rotierbare Walzenzapfen (106) von einer Zapfenhülse (108) umgeben ist,
- die zylindrischen Keramikstäbe (110) derart in den halbzylindrischen Schlitzen (116) installiert sind, dass sich mindestens ein Teil des Hauptteils (112) der zylindrischen Keramikstäbe (110) in den Durchgang (102) hinein erstreckt, um mit der Zapfenhülse (108) in Register zu kommen;
- die Rollenarme (200) ferner einen Drucklagereinsatz (165) aufweisen, der in einer Öffnung (202) im Rollenarm (200) montiert ist, um Seitenschübe des Walzenzapfens (106) bei der Rotation zu dämpfen, wobei jedes Ende des Walzenzapfens (106) mit dem Einsatz (165) in Register steht;
und der Drucklagereinsatz (165) umfasst:
- eine Druckhülse (164) mit einem geflanschten offenen Ende (168) und einem anderen, geschlossenen Ende (169), die einen zylindrischen Innenhohlraum (166) definieren,
- wobei die Druckhülse (164) derart in die Öffnung (202) des Rollenarms (200) eingeführt ist, dass der zylindrische Innenhohlraum (166) axial mit der zentralen Längsachse des Rollenarms (200) in Ausrichtung tritt und das geflanschte Ende (168) dem Walzenzapfen (106) zugewandt ist, um seitliche Bewegungen der Druckhülse (164) weg vom Walzenzapfen (106) einzuschränken;
- einen zylindrischen Keramikdruckstab (170), die im Wesentlichen die gleiche Länge aufweist wie der zylindrische Innenhohlraum (166) der Hülse (164) und ein erstes Ende (172), das in die Hülse (164) aufgenommen werden kann, und ein zweites Ende (173), das mit dem Walzenzapfen (106) in Register treten soll, aufweist; und
- eine Schutzabdeckung (174) des Einsatzes, die über dem geschlossenen anderen Ende (169) der Druckhülse (164) installiert ist, um den Fluss des geschmolzenen Materials auf die Druckhülse (164) einzuschränken.

2. Walzenzapfeneinrichtung zum Einsatz in einer Schmelzbadumgebung mit Rollenarmen (200), die eine Klemme (100) unterstützen, wobei die Klemme (100) eine Innenwand (104) aufweist, die einen dadurch verlaufenden, im Wesentlichen zylindrischen Durchgang (102) zur Aufnahme eines Walzenzapfens (106) aufweist, der um eine zentrale Längsachse rotierbar ist, wobei die Achse den Mittelpunkt der beiden Walzenenden des rotierbaren Walzenzapfens (106), wobei die Walzenzapfeneinrichtung umfasst:
- eine Mehrzahl halbzylindrischer Schlitze (116), die sich in Längsrichtung entlang der Innenwand (104) der Klemme (100) und entlang der ganzen Länge des zylindrischen Durchgangs (102) erstrecken;
- eine Mehrzahl entsprechender zylindrischer Keramikstäbe (110) mit einem Hauptteil (112) und zwei Enden (114), wobei die zylindrischen Keramikstäbe (110) in den halbzylindrischen Schlitzen (116) installiert sind,
**dadurch gekennzeichnet, dass**
- der rotierbare Walzenzapfen (106) von einer Zapfenhülse (108) umgeben ist,
- die zylindrischen Keramikstäbe (110) derart in den halbzylindrischen Schlitzen (116) installiert sind, dass sich mindestens ein Teil des Hauptteils (112) der zylindrischen Keramikstäbe (110) in den Durchgang (102) hinein erstreckt, um mit der Zapfenhülse (108) in Register zu kommen;
- die Rollenarme (200) ferner einen Drucklagereinsatz (165) aufweisen, der in einer Öffnung (202) im Rollenarm (200) montiert ist, um Seitenschübe des Walzenzapfens (106) bei der Rotation zu dämpfen, wobei jedes Ende des Walzenzapfens (106) mit dem Einsatz (165) in Register steht;
und der Drucklagereinsatz (165) umfasst:
- eine Druckhülse (164) mit einem geflanschten offenen Ende (168) und einem anderen, offenen Ende (171), die einen dadurch verlaufenden, im Wesentlichen zylindrischen Innendurchgang (167) definieren,
- wobei die Druckhülse (164) derart in eine Öffnung (202) des Rollenarms (200) eingeführt ist, dass der zylindrische Innendurchgang (167) axial mit der zentralen Längsachse des Rollenarms (200) in Ausrichtung tritt und das geflanschte Ende dem Walzenzapfen (106) zugewandt ist, um seitliche Bewegungen der Druckhülse (164) weg vom Walzenzapfen (106) einzuschränken;
- einen zylindrischen Keramikdruckstab (170) mit einem ersten Ende (172), das in die Hülse (164) aufgenommen werden kann, und einem zweiten Ende (174), das amit dem Walzenzapfen (106) in Register treten soll, und
- eine Schutzabdeckung (174) des Einsatzes, die über dem offenen anderen Ende (171) der Druckhülse (164) installiert ist, um den Fluss des geschmolzenen Materials auf die Druckhülse (164) einzuschränken.

3. Walzenzapfeneinrichtung nach Anspruch 1 oder 2, wobei der Einsatz (165) ferner umfasst:
- eine mit der zentralen Längsachse des Rollarms (200) axial ausgerichtete Öffnung (176) in der Schutzabdeckung (174);
- eine Zylinderschraube (178) mit einem länglichen Körper, der in die Öffnung (176) eingeführt werden kann, um mit dem anderen Ende (169; 171) der Druckhülse (164) in Eingriff zu treten, und
- wobei die Zylinderschraube (178) einen Kopf (180) zum Eingreifen in die Abdeckung (174) und zur Einschränkung der seitlichen Bewegungen der Hülse (164) in Richtung des Walzenzapfens (196) aufweist.

4. Bereitgestellt wird ein Drucklagereinsatz (165) zum Einsatz in einer Walzenzapfeneinrichtung mit geschmolzenem Material, wobei der Einsatz (165) **dadurch gekennzeichnet ist, dass** es umfasst:
- eine Druckhülse (164) mit einem geflanschten offenen Ende (168) und einem anderen, offenen Ende (171), die einen dadurch verlaufenden, im Wesentlichen zylindrischen Innendurchgang (167) definieren,
- einen zylindrischen Keramikdruckstab (170), die im Wesentlichen die gleiche Länge aufweist wie der zylindrische Innendurchgang (167) der Hülse (164) und ein erstes Ende (172), das in die Hülse (164) aufgenommen werden kann, und ein zweites Ende (172), das mit dem Walzenzapfen (168) im Wesentlichen ausgerichtet werden soll, aufweist; und
- eine Schutzabdeckung (174) des Einsatzes, die über dem offenen anderen Ende (171) der Druckhülse (164) installiert ist, um den Fluss des geschmolzenen Materials auf die Druckhülse (164) einzuschränken.

## Revendications

1. Ensemble tourillon de cylindre destiné à être utilisé dans un environnement de bain en fusion ayant des bras de cylindre (200) supportant une pince (100), la pince (100) ayant une paroi interne (104) définissant un passage sensiblement cylindrique (102) à l'intérieur afin de recevoir un tourillon de cylindre (106) capable de tourner autour d'un axe longitudinal central, ledit axe définissant le centre de deux extrémités de cylindre du tourillon de cylindre rotatif (106), l'ensemble tourillon de cylindre comprenant :
- une pluralité de fentes semi-cylindriques (116) qui s'étendent longitudinalement le long de la paroi interne (104) de la pince (100) et qui s'étendent le long de la longueur entière du passage cylindrique (102) ;
- une pluralité de barres en céramique cylindriques correspondantes (110) ayant un corps (112) et deux extrémités (114), lesdites barres en céramique cylindriques (110) étant installées dans lesdites fentes semi-cylindriques (116),
**caractérisé en ce que** :
- le tourillon de cylindre rotatif (106) est entouré par un manchon de tourillon (108),
- lesdites barres en céramique cylindriques (110) sont installées dans lesdites fentes semi-cylindriques (116) de sorte qu'au moins une partie dudit corps (112) des barres en céramique cylindriques (110) s'étende dans ledit passage (102) afin de s'accoupler avec le manchon de tourillon (108) ;
- les bras de cylindre (200) possèdent en outre un insert de palier de butée (165) monté dans une ouverture (202) dans le bras de cylindre (200) afin d'amortir les poussées latérales du tourillon de cylindre (106) pendant la rotation, chaque extrémité du tourillon de cylindre (106) étant accouplée avec l'insert de palier de butée (165),
et l'insert de palier de butée (165) comprend :
- un manchon de palier de butée (164) ayant une extrémité à bride ouverte (168) et une autre extrémité fermée (169) définissant une cavité intérieure cylindrique (166) ;
- ledit manchon de palier de butée (164) étant inséré dans l'ouverture (202) du bras de cylindre (200) de sorte que la cavité intérieure cylindrique (166) s'aligne axialement avec l'axe longitudinal central du bras de cylindre (200) et que ladite extrémité à bride (168) fasse face au tourillon de cylindre (106) afin de limiter le mouvement latéral dudit manchon de palier de butée (164) à l'écart du tourillon de cylindre (106) ;
- une barre en céramique cylindrique de palier de butée (170) ayant sensiblement la même longueur que ladite cavité intérieure cylindrique (166) du manchon (164) et ayant une première extrémité (172) qui peut être reçue dans ledit manchon (164) et une seconde extrémité (173) destinée à s'accoupler avec le tourillon de cylindre (106) ; et
- un capot de protection d'insert (174) installé par-dessus l'autre extrémité fermée (169) du manchon de palier de butée (164) afin de limiter le flux de matière en fusion vers le manchon de palier de butée (164).

2. Ensemble tourillon de cylindre destiné à être utilisé dans un environnement de bain en fusion ayant des bras de cylindre (200) supportant une pince (100), la pince (100) ayant une paroi interne (104) définissant un passage sensiblement cylindrique (102) à l'intérieur afin de recevoir un tourillon de cylindre (106) capable de tourner autour d'un axe longitudinal central, ledit axe définissant le centre de deux extrémités de cylindre du tourillon de cylindre rotatif (106), l'ensemble tourillon de cylindre comprenant :
- une pluralité de fentes semi-cylindriques (116) qui s'étendent longitudinalement le long de la paroi interne (104) de la pince (100) et qui s'étendent le long de la longueur entière du passage cylindrique (102) ;
- une pluralité de barres en céramique cylindriques correspondantes (110) ayant un corps (112) et deux extrémités (114), lesdites barres en céramique cylindriques (110) étant installées dans lesdites fentes semi-cylindriques (116),
**caractérisé en ce que** :
- le tourillon de cylindre rotatif (106) est entouré par un manchon de tourillon (108),
- lesdites barres en céramique cylindriques (110) sont installées dans lesdites fentes semi-cylindriques (116) de sorte qu'au moins une partie dudit corps (112) des barres en céramique cylindriques (110) s'étende dans ledit passage (102) afin de s'accoupler avec le manchon de tourillon (108) ;
- les bras de cylindre (200) possèdent en outre un insert de palier de butée (165) monté dans une ouverture (202) dans le bras de cylindre (200) afin d'amortir les poussées latérales du tourillon de cylindre (106) pendant la rotation, chaque extrémité du tourillon de cylindre (106) étant accouplée avec l'insert de palier de butée (165),
et l'insert de palier de butée (165) comprend :
- un manchon de palier de butée (164) ayant une extrémité à bride ouverte (168) et une autre extrémité ouverte (171) définissant un passage intérieur sensiblement cylindrique (167) à l'intérieur ;
- ledit manchon de palier de butée (164) étant inséré dans une ouverture (202) du bras de cylindre (200) de sorte que le passage intérieur cylindrique (167) s'aligne axialement avec l'axe longitudinal central du bras de cylindre (200) et que ladite extrémité à bride fasse face au tourillon de cylindre (106) afin de limiter le mouvement latéral dudit manchon de palier de butée (164) à l'écart du tourillon de cylindre (106) ;
- une barre en céramique cylindrique de palier de butée (170) ayant une première extrémité (172) qui peut être reçue dans ledit manchon (164) et une seconde extrémité (174) destinée à s'accoupler avec le tourillon de cylindre (106) ;
et
- un capot de protection d'insert (174) installé par-dessus l'autre extrémité ouverte (171) du manchon de palier de butée (164) afin de limiter le flux de matière en fusion vers le manchon de palier de butée (164).

3. Ensemble tourillon de cylindre selon la revendication 1 ou 2, dans lequel l'insert de palier de butée (165) comprend en outre :
- une ouverture de capot (176) dans le capot de protection d'insert (174) en alignement axial avec l'axe longitudinal central du bras de cylindre (200) ;
- une vis de blocage (178) ayant un corps allongé qui peut être inséré dans ladite ouverture de capot (176) afin de s'engager avec l'autre extrémité (169 ; 171) du manchon de palier de butée (164) ; et
- ladite vis de blocage (178) ayant une tête (180) destinée à s'engager avec ledit capot de protection d'insert (174) et à limiter le mouvement latéral dudit manchon (164) vers le tourillon de cylindre (106).

4. Insert de palier de butée (165) destiné à être utilisé dans un ensemble tourillon de cylindre avec une matière en fusion, l'insert de palier de butée (165) étant **caractérisé en ce qu'**il comprend :
- un manchon de palier de butée (164) ayant une extrémité à bride ouverte (168) et une autre extrémité ouverte (171) définissant un passage intérieur sensiblement cylindrique (167) à l'intérieur ;
- une barre en céramique cylindrique de palier de butée (170) ayant sensiblement la même longueur que ledit passage intérieur cylindrique (167) du manchon de palier de butée (164) et ayant une première extrémité (172) qui peut être reçue dans ledit manchon (164) et une seconde extrémité (172) destinée à s'aligner sensiblement avec ladite extrémité à bride ouverte (168) ; et
- un capot de protection d'insert (174) installé par-dessus l'autre extrémité ouverte (171) du manchon de palier de butée (164) afin de limiter le flux de matière en fusion vers le manchon de palier de butée (164).
